# EUROPÄISCHE PATENTSCHRIFT

(11) **EP 3 393 752 B1**
(45) Veröffentlichungstag und Bekanntmachung des Hinweises auf die Patenterteilung: **17.02.2021**
(21) Anmeldenummer: 16812720.7
(22) Anmeldetag: 12.12.2016
(51) Int. Cl.: B29C 48/695, B29B 9/06, B29C 48/345, B29C 48/05, B29C 48/92, B29C 48/00, B29C 48/25

(54) **EXTRUDER MIT VERSCHIEBBARER LOCHPLATTE**
EXTRUDER WITH SLIDABLE BREAKER PLATE
EXTRUDEUSE AVEC UNE PLAQUE DU FILTRE COULISSANTE

(30) Priorität: 22.12.2015 DE 102015226557
(43) Veröffentlichungstag der Anmeldung: 31.10.2018
(73) Patentinhaber: BASF SE, 67056 Ludwigshafen am Rhein (DE)
(72) Erfinder: LOHSE, Andreas, 49448 Lemfoerde (DE)
(74) Vertreter: BASF IP Association
(86) Internationale Anmeldenummer: PCT/EP2016/080583
(87) Internationale Veröffentlichungsnummer: WO 2017/108468

(56) Entgegenhaltungen:
- DE-A1-102006 056 889
- JP-A- H04 278 325
- JP-A- S60 225 727
- US-A- 5 198 237
- US-A- 5 577 437
- US-A- 5 762 975
- US-A1- 2007 259 067

## Beschreibung

Die Erfindung betrifft einen Extruder umfassend ein Gehäuse mit einem Strömungskanal für eine Schmelze sowie eine den Strömungskanal austrittsseitig begrenzende Lochplatte.

Gattungsgemäße Extruder und Lochplatten sind aus der Literatur bekannt. So beschreibt das Dokument DE 35 32 937 A1 beispielsweise eine Lochplatte, die am austrittsseitigen Ende eines Extruders befestigt und für die Unterwassergranulierung von Kunststoffsträngen geeignet ist.

Bei üblichen Produktionsprozessen, zum Beispiel zur Herstellung von Kunststoffgranulat, wird erhitztes Material wie Kunststoffschmelzen durch einen Strömungskanal im Gehäuse eines Extruders gefördert und am Austritt durch Öffnungen in der Lochplatte gepresst. Mit fortschreitendem Prozessverlauf bilden sich Ablagerungen und Anhaftungen in den Öffnungen der Lochplatte, bis schließlich die offenen Querschnitte derart verkleinert sind, dass die Lochplatte gereinigt oder ausgetauscht werden muss. Bei einer Reinigung im laufenden Betrieb geht damit unweigerlich ein Materialverlust einher. Beim Austausch der Lochplatte muss die Anlage abgestellt werden, was zu Ausfallzeiten und damit verbundenen Kapazitätsverlusten führt.

Um den Material- und Kapazitätsverlusten entgegenzuwirken sind Filtersiebe bekannt, die im Strömungsverlauf vor der Lochplatte im Inneren des Extruders auswechselbar eingesetzt sind. So offenbart das Dokument DE 30 13 038 A1 eine Siebwechselvorrichtung für Extruder zur kontinuierlichen Behandlung schmelzflüssiger Kunststoffe, bei der ein quer zum Strömungskanal der Schmelze verschiebbarer Wechselschieber in einer Aufnahmebohrung im Extrudergehäuse vorgesehen ist.

In der Offenlegungsschrift DE 28 11 771 A1 wird eine Filtersiebwechselvorrichtung für einen Kunstharzextruder beschrieben, bei dem der Strömungsweg im Inneren des Extruders in zwei parallele Teilkanäle aufgeteilt ist. Vor dem Austritt aus dem Extruder sind die beiden Teilkanäle wieder zu einem Austrittskanal zusammengeführt. In jedem der beiden Teilkanäle befindet sich eine verschiebbare Platte, die je zur Hälfte massiv ohne Durchbrüche ausgeführt ist und die andere Hälfte eine Bohrung mit einem eingesetzten Filtersieb aufweist. Die Platten sind so geschaltet, dass im Betrieb jeweils ein Teilkanal durch den massiven Teil einer Platte abgesperrt ist, und die Kunststoffschmelze durch das im anderen Teilkanal befindliche Filtersieb fließt. Zum Reinigen der Filtersiebe werden die Stellungen der Platten getauscht, sodass danach der zuvor offene Kanal geschlossen ist und die Schmelze danach durch den zuvor geschlossenen Kanal fließt. Das verschmutzte Filtersieb befindet sich dann außerhalb des Extrudergehäuses und kann ausgetauscht oder gereinigt werden. In dem Dokument JPH 04278325 A ist eine Vorrichtung offenbart, welche durch einen Querschieber im Extrusionskopf die Anströmung verschiedener Bereiche der Lochplatte erlaubt. Das Dokument US5198237 A offenbart einen Extrusionskopf zum schnellen Wechseln von Formeinsätzen.

Die beschriebenen Maßnahmen können ein Verschmutzen und Verstopfen der Lochplatte am Austritt aus dem Extruder jedoch nicht verhindern, sondern lediglich verzögern. Materialverluste und Ausfallzeiten werden dadurch also lediglich verringert.

Es stellte sich die Aufgabe, einen gattungsgemäßen Extruder derart weiterzubilden, dass produktionsbedingte Materialverluste und Ausfallzeiten auf ein Minimum reduziert werden.

Diese Aufgabe wird erfindungsgemäß gelöst durch einen Extruder umfassend ein Gehäuse mit einem Strömungskanal für eine Schmelze sowie eine den Strömungskanal austrittsseitig begrenzende Lochplatte, wobei die Lochplatte mindestens zwei voneinander beabstandete Durchströmflächen aufweist, wobei jede Durchströmfläche mindestens eine Durchströmöffnung enthält, und weiterhin die Lochplatte in einer Wechseleinrichtung gelagert ist, wobei die Wechseleinrichtung Führungselemente aufweist, in denen die Lochplatte im Wesentlichen senkrecht zum Strömungskanal verschiebbar ist.

Unter einer Lochplatte wird im Rahmen der Erfindung das Bauteil verstanden, aus dem die Schmelze den Extruder verlässt, bevor sie der weiteren Verarbeitung zugeführt wird. Gegebenenfalls im Inneren des Extruders vorhandene Filter- oder Siebvorrichtungen sind keine "Lochplatten" im Sinne der Erfindung.

Die erfindungsgemäße Lochplatte weist mindestens zwei voneinander beabstandete Durchströmflächen auf, wobei jede Durchströmfläche mindestens eine Durchströmöffnung enthält. Die Durchströmöffnungen können unterschiedlich gestaltet sein, sowohl im Hinblick auf ihre Querschnittsform (z.B. rund, oval, länglich oder eckig) als auch im Hinblick auf ihre Dimension. Die Durchströmöffnungen können alle dieselbe Form und Dimension aufweisen, sie können aber auch unterschiedlich gestaltet sein. Die Form und Größe der Durchströmfläche wird durch die Durchströmöffnungen bestimmt, die die Durchströmfläche enthält. Bei einer runden Durchströmfläche beispielsweise sind die Durchströmöffnungen derart angeordnet, dass die Einhüllende um alle Durchströmöffnungen dieser Durchströmfläche eine runde Form aufweist.

Vorzugsweise sind die Durchströmflächen in ihrer äußeren Kontur (Einhüllenden) der Querschnittsform des Strömungskanals des Extruders angepasst, sodass durch den Strömungskanal strömende Schmelze vorzugsweise vollflächig auf die Durchströmfläche der Lochplatte trifft.

In einer vorteilhaften Ausgestaltung umfassen die Durchströmöffnungen Strangpressdüsen zur Bildung von Kunststofffäden, die anschließend mit Hilfe eines Werkzeugs, z.B. eines Messers, zu Granulat weiterverarbeitet werden können.

Unter dem Abstand der Durchströmflächen voneinander wird die kürzeste Entfernung zwischen zwei Punkten der Einhüllenden der jeweiligen Durchströmflächen verstanden. Bevorzugt ist der Abstand zwischen den Durchströmflächen der Lochplatte so bemessen, dass bei Positionierung einer Durchströmfläche am Austritt des Strömungskanals sich mindestens eine andere Durchströmfläche außerhalb des Gehäuses des Extruders befindet. Eine derartige Ausgestaltung hat den Vorteil, dass die außerhalb des Gehäuses befindliche Durchströmfläche problemlos gereinigt oder ausgetauscht werden kann, ohne dass hierfür der Schmelzestrom unterbrochen werden muss.

Erfindungsgemäß ist die Lochplatte im Wesentlichen senkrecht zum Strömungskanal verschiebbar. Relevant ist der Winkel, der zwischen der Achse des Strömungskanals und der Verschiebeebene der Lochplatte gebildet wird. Eine in diesem Sinne im Wesentlichen senkrechte Verschiebung hat den Vorteil, dass die Zeitspanne während des Verschiebens, in der die Schmelze auf einen massiven, undurchlässigen Bereich der Lochplatte trifft, minimiert wird.

In einer bevorzugten Ausgestaltung der Erfindung ist die Wechseleinrichtung mit ihren Führungselementen derart gestaltet, dass die Verschiebung der Lochplatte linear erfolgt.

In einer weiteren bevorzugten Ausgestaltung der Erfindung ist die Wechseleinrichtung mit ihren Führungselementen derart gestaltet, dass die Verschiebung der Lochplatte durch Rotation der Lochplatte erfolgt. Bei einer derartigen Ausgestaltung ist es bevorzugt, dass die Lochplatte über ihren Umfang verteilt eine Vielzahl an Durchströmflächen aufweist, beispielsweise 3, 4, 5, 6 oder noch mehr Durchströmflächen. Vorzugsweise ist die Vielzahl an Durchströmflächen rotationssymmetrisch über die Lochplatte verteilt angeordnet. Auch bei dieser Ausführungsform sind die Anordnung der Durchströmflächen und die Abstände zwischen ihnen so gewählt, dass bei Positionierung einer Durchströmfläche am Austritt des Strömungskanals sich mindestens eine andere Durchströmfläche außerhalb des Gehäuses des Extruders befindet.

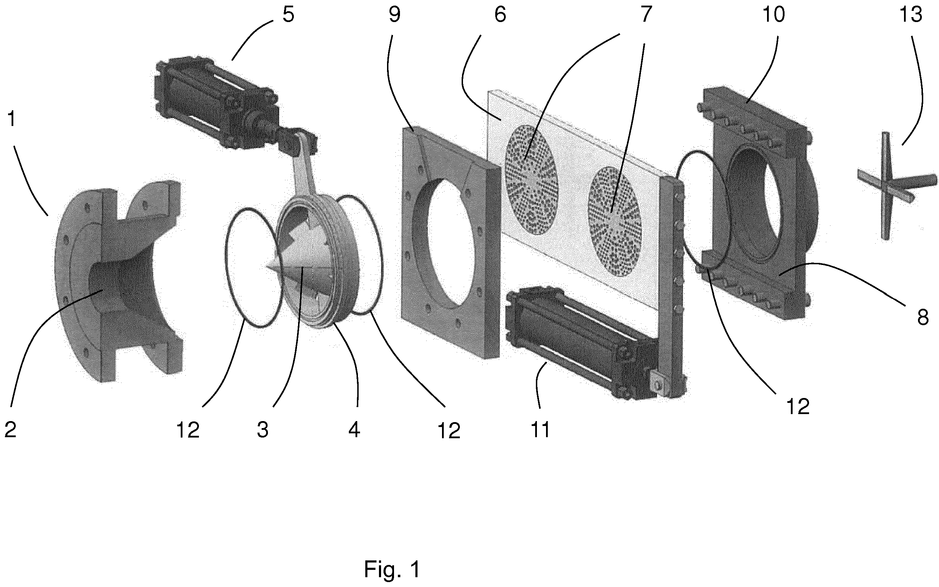

Bei bekannten Lochplatten ist in Strömungsrichtung der Schmelze vor der Lochplatte ein Anströmkegel vorgesehen, der fest mit der Lochplatte verbunden ist, wie dies beispielhaft in Figur 1 der Offenlegungsschrift DE 35 32 937 A1 dargestellt ist. Die Lochplatte wiederum ist fest mit dem Ende des Extrudergehäuses verbunden. Ein Verschieben der Lochplatte ist bei einer derartigen Gestaltung nicht möglich.

In einer erfindungsgemäßen Ausgestaltung, bei der sich in Strömungsrichtung der Schmelze betrachtet unmittelbar vor der Lochplatte ein Anströmkegel befindet, ist dieser Anströmkegel baulich von der Lochplatte getrennt, sodass die Durchströmflächen der Lochplatte gegenüber dem Anströmkegel verschiebbar sind. Der Begriff "Kegel" ist in diesem Zusammenhang nicht streng mathematisch zu verstehen. Im Sinne der Erfindung kann der Anströmkegel die Form eines Kegels, eines Kegelstumpfes oder eine andere sich entgegen der Strömungsrichtung der Schmelze verjüngende Form aufweisen. Die Grundfläche kann dabei beispielsweise kreisförmig, ellipsenförmig oder eckig sein.

In einer besonders vorteilhaften Weiterbildung ist der Anströmkegel in einem Anströmelement integriert, das Durchtrittsflächen und Abdeckflächen aufweist und derart verschiebbar angeordnet ist, dass bei einer Verschiebung des Anströmelements eine erste Teilmenge von Löchern der Lochplatte freigegeben und eine zweite Teilmenge von Löchern der Lochplatte verschlossen sind. Entsprechende Anströmelemente und deren Konfiguration sind in der parallelen deutschen Patentanmeldung mit der Nummer 102015226512.9 ausführlich beschrieben.

In einer vorteilhaften Ausführungsform umfasst die Wechseleinrichtung eine in Strömungsrichtung der Schmelze betrachtet erste Platte und eine zweite Platte, die beide im Inneren eine Öffnung aufweisen, durch die die Schmelze strömen kann. Bei dieser Ausführungsform weist die erste Platte, die zweite Platte oder beide Platten eine Aussparung auf, in der die Lochplatte verschiebbar gelagert ist. Die Aussparung oder die Aussparungen fungieren als Führungselemente, in denen die Lochplatte im Wesentlichen senkrecht zum Strömungskanal verschiebbar ist.

Bevorzugt sind in der ersten Platte und in der zweiten Platte auf oder in ihrer jeweiligen, der Lochplatte zugewandten Seite Dichtelemente angeordnet, die verhindern, dass Teile der Schmelze zwischen Platte und Lochplatte austreten. Geeignete Materialien und Ausführungsformen für die Dichtelemente sind dem Fachmann bekannt, beispielsweise basierend auf Grafit, Silikonen, Elastomeren oder Metallen wie Kupfer.

In einer vorteilhaften Weiterbildung der Erfindung sind die Lochplatte, Bauteile der Wechseleinrichtung oder Lochplatte und Bauteile der Wechseleinrichtung beheizbar ausgestaltet, beispielsweise durch Eintrag von elektrischer Energie oder Strahlungswärme.

Das Verschieben der Lochplatte in der Wechseleinrichtung kann manuell erfolgen, gegebenenfalls unter Zuhilfenahme von Werkzeugen wie Hebeln. Vorzugsweise erfolgt das Verschieben unter Nutzung von Hilfsenergie, beispielsweise elektrischer, pneumatischer oder hydraulischer Hilfsenergie. Vorzugsweise erfolgt das Verschieben der Lochplatte mit Hilfe eines Stellantriebs.

In einer vorteilhaften Ausgestaltung ist im oder am Gehäuse des Extruders mindestens ein Sensor vorhanden, der zur Erfassung einer Information über den Druck im Strömungskanal geeignet ist.

Aus der Information über den Druck im Strömungskanal lassen sich Informationen über den Verstopfungsgrad der in Betrieb befindlichen Durchströmfläche gewinnen.

In einer bevorzugten Ausführungsform werden diese Informationen mittels einer Einrichtung zur elektronischen Datenübertragung an eine Meldeeinrichtung übermittelt. Die Meldeeinrichtung kann sich in unmittelbarer Nähe des Extruders befinden, beispielsweise um optisch und/oder akustisch auf eine bevorstehende Verstopfung der Lochscheibe aufmerksam zu machen. Die Meldeeinrichtung kann aber auch räumlich entfernt vom Extruder sein, beispielsweise als optisch und/oder akustisch wahrnehmbare Anzeige in einem Prozessleitsystem.

In einer bevorzugten Ausführungsform weist der erfindungsgemäße Extruder einen Stellantrieb zum Verschieben der Lochplatte, mindestens einen Sensor zur Erfassung eines Druckes im Strömungskanal sowie ein Steuerungsmodul auf, wobei das Steuerungsmodul derart eingerichtet ist, dass bei Erreichen eines vorgegebenen kritischen Wertes für den Druck oder für eine Druckdifferenz die Lochplatte mit Hilfe des Stellantriebs verschoben wird.

In einer vorteilhaften Ausgestaltung ist der Sensor derart angeordnet und eingerichtet, dass der Absolutdruck im Strömungskanal bestimmt wird. In einer weiteren vorteilhaften Ausgestaltung sind mindestens zwei Sensoren vorgesehen, die derart angeordnet und eingerichtet sind, dass eine Druckdifferenz bestimmt wird. Der vorgegebene kritische Wert für den Druck oder für die Druckdifferenz wird vorzugsweise auf die jeweils behandelte Schmelze und die entsprechenden Prozessbedingungen abgestimmt. So kann beim Erfassen des Absolutdrucks als kritischer Wert beispielsweise ein Druck vorgegeben werden, der um einen bestimmten Betrag niedriger ist als der Druck, bei dem Sicherheitseinrichtungen wie ein Sicherheitsventil oder ein Abfahrventil ausgelöst werden.

Das Steuerungsmodul kann in bekannter Weise verwirklicht sein, beispielsweise als separater Mikrocontroller, integriert in den Stellantrieb oder als Baustein in einem Prozessleitsystem.

Mit dieser Ausführungsform lässt sich der Vorgang des Lochplattenwechsels weitestgehend automatisieren. In einem bevorzugten Verfahren werden die folgenden Schritte durchgeführt:
(1) Betrieb des Extruders mit einer ersten Durchströmfläche der Lochplatte am Austritt des Strömungskanals.
(2) Überwachung des Druckes im Gehäuse des Extruders.
(3) Bei Erreichen eines vorgegebenen kritischen Wertes für den Druck Betätigung des Stellantriebs und Verschieben der Lochplatte, sodass eine zweite, saubere Durchströmfläche am Austritt des Strömungskanals positioniert ist und sich die erste Durchströmfläche außerhalb des Extrudergehäuses befindet.
(4) Reinigung oder Austausch der ersten Durchströmfläche.
(5) Fortsetzung des Verfahrens bei Schritt (2), wobei erste und zweite Durchströmfläche abwechselnd durchströmt und gereinigt werden.

Gegenüber bekannten Vorrichtungen weist die erfindungsgemäße Vorrichtung den Vorteil auf, dass ein nahezu vollkontinuierlicher Betrieb des Extruders gewährleistet werden kann. In jedem Fall wird die Verfügbarkeit der Anlage signifikant erhöht, dadurch die Kapazität gesteigert und Materialverlust vermieden.

Die Erfindung wird im Folgenden mit Verweis auf die Zeichnung näher erläutert. Die Zeichnung ist als Prinzipdarstellung zu verstehen. Sie stellt keine Beschränkung der Erfindung dar, beispielsweise im Hinblick auf konkrete Abmessungen oder Ausgestaltungsvarianten.

### Liste der verwendeten Bezugszeichen

- 1: Extruderaustritt
- 2: Strömungskanal
- 3: Anströmkegel
- 4: Anströmelement
- 5: Stellantrieb für Anströmelement
- 6: Lochplatte
- 7: Durchströmfläche
- 8: Führungselement
- 9: erste Platte
- 10: zweite Platte
- 11: Stellantrieb für Wechseleinrichtung
- 12: Dichtung
- 13: Granulierwerkzeug

In Fig. 1 ist schematisch in Explosionsdarstellung eine bevorzugte Ausführungsform der Erfindung wiedergegeben. Von dem Extruder ist lediglich der Extruderaustritt 1 dargestellt. Die Strömungsrichtung der Schmelze verläuft von links nach rechts. An dem austrittsseitigen Ende des Extruders ist eine erste Platte 9 und eine zweite Platte 10 angeflanscht und fest mit dem Extruder verbunden.

Die zweite Platte 10 weist zwischen dem oberen und dem unteren Ende im Inneren eine Aussparung 8 auf, in der eine Lochplatte 6 verschiebbar gelagert ist. Die Lochplatte 6 umfasst zwei Durchströmflächen 7, die beide eine Vielzahl an Durchströmöffnungen enthalten. Die äußere Kontur der Durchströmflächen 7 (Einhüllende um die Durchströmöffnungen) ist jeweils kreisrund und entspricht in ihrem Querschnitt dem Innenquerschnitt des Strömungskanals 2 an dieser Stelle. Zum Verschieben der Lochplatte 6 ist ein Stellantrieb 11 vorgesehen, der über eine Linearbewegung die Lochplatte im Wesentlichen senkrecht zum Strömungskanal 2 verschieben kann.

Zwischen dem Extruderaustritt 1 und der ersten Platte 9 ist ein Anströmelement 4 angeordnet, das mit Hilfe eines Stellantriebs 5 um einen vorgegebenen Winkel verdreht werden kann. Zu konkreten Ausgestaltungen und Vorteilen dieses Anströmelements 4 wird auf die parallele deutsche Patentanmeldung 102015226512.9 verwiesen.

Um einen Austritt der Schmelze an unerwünschter Stelle zu vermeiden, sind Dichtelemente 12 zwischen Extruderaustritt 1, Anströmkegel 3, Lochplatte 6 und zweiter Platte 10 vorgesehen.

Am austrittsseitigen Ende der Vorrichtung ist ein Granulierwerkzeug 13 vorgesehen, das an der Lochplatte 6 anliegt und durch eine Drehbewegung die durch die Durchströmöffnungen austretende Schmelzstränge in kleinteiliges Granulat zerschneidet.

## Patentansprüche

1. Extruder umfassend ein Gehäuse mit einem Strömungskanal (2) für eine Schmelze sowie eine den Strömungskanal austrittsseitig begrenzende Lochplatte (6), wobei die Lochplatte (6) mindestens zwei voneinander beabstandete Durchströmflächen (7) aufweist und jede Durchströmfläche (7) mindestens eine Durchströmöffnung enthält, und weiterhin die Lochplatte (6) in einer Wechseleinrichtung gelagert ist, wobei die Wechseleinrichtung Führungselemente (8) aufweist, in denen die Lochplatte (6) im Wesentlichen senkrecht zum Strömungskanal (2) verschiebbar ist, **dadurch gekennzeichnet, dass** der Extruder in Strömungsrichtung der Schmelze betrachtet unmittelbar vor der Lochplatte (6) einen Anströmkegel (3) aufweist, der baulich von der Lochplatte getrennt ist, sodass die Durchströmflächen (7) der Lochplatte gegenüber dem Anströmkegel (3) verschiebbar sind.

2. Extruder nach Anspruch 1, wobei der Abstand zwischen den Durchströmflächen (7) der Lochplatte so bemessen ist, dass bei Positionierung einer Durchströmfläche am Austritt des Strömungskanals (2) sich mindestens eine andere Durchströmfläche außerhalb des Gehäuses des Extruders befindet.

3. Extruder nach einem der Ansprüche 1 bis 2, wobei die Wechseleinrichtung eine in Strömungsrichtung der Schmelze betrachtet erste Platte (9) und eine zweite Platte (10) umfasst, die beide im Inneren eine Öffnung aufweisen, durch die die Schmelze strömen kann, und wobei die erste Platte (9) und/oder die zweite Platte (10) eine Aussparung (7) aufweist, in der die Lochplatte (6) verschiebbar gelagert ist.

4. Extruder nach einem der Ansprüche 1 bis 3, der weiterhin einen Stellantrieb (11) zum Verschieben der Lochplatte (6), mindestens einen Sensor zur Erfassung eines Druckes im Strömungskanal (2) sowie ein Steuerungsmodul aufweist, wobei das Steuerungsmodul derart eingerichtet ist, dass bei Erreichen eines vorgegebenen kritischen Wertes für den Druck oder für eine Druckdifferenz die Lochplatte (6) mit Hilfe des Stellantriebs (11) verschoben wird.

## Claims

1. An extruder comprising a housing having a flow channel (2) for a melt and a perforated plate (6) delimiting the flow channel on the outlet side, wherein the perforated plate (6) has at least two through-flow areas (7) spaced apart from one another and each through-flow area (7) comprises at least one through-flow opening, and the perforated plate (6) is furthermore mounted in a changing device, wherein the changing device has guide elements (8), in which the perforated plate (6) can be moved substantially perpendicularly to the flow channel (2), wherein the extruder, directly ahead of the perforated plate (6) when viewed in the direction of flow of the melt, has an inlet flow cone (3), which is structurally separate from the perforated plate, thus allowing the through-flow areas (7) of the perforated plate to be moved relative to the inlet flow cone (3).

2. The extruder according to claim 1, wherein the spacing between the through-flow areas (7) of the perforated plate is dimensioned in such a way that, when one through-flow area is positioned at the outlet of the flow channel (2), at least one other through-flow area is situated outside the housing of the extruder.

3. The extruder according to either of claims 1 and 2, wherein the changing device has a plate (9) which is first and a plate (10) which is second when viewed in the direction of flow of the melt, both of which have an internal opening through which the melt can flow, and wherein the first plate (9) and/or the second plate (10) have/has a recess (7), in which the perforated plate (6) is movably mounted.

4. The extruder according to one of claims 1 to 3, which furthermore has an actuator (11) for moving the perforated plate (6), at least one sensor for detecting a pressure in the flow channel (2) and a control module, wherein the control module is designed in such a way that the perforated plate (6) is moved with the aid of the actuator (11) when a predetermined critical value for the pressure or for a pressure difference is reached.

## Revendications

1. Extrudeuse comprenant un boîtier avec un canal d'écoulement (2) pour une matière en fusion ainsi qu'une plaque perforée (6) délimitant du côté de la sortie le canal d'écoulement, la plaque perforée (6) présentant au moins deux surfaces de passage d'écoulement (7) espacées l'une de l'autre et chaque surface de passage d'écoulement (7) contenant au moins une ouverture de passage d'écoulement, et la plaque perforée (6) étant en outre supportée dans un dispositif remplaçable, le dispositif remplaçable présentant des éléments de guidage (8) dans lesquels la plaque perforée (6) peut être coulissée essentiellement perpendiculairement au canal d'écoulement (2), **caractérisée en ce que** l'extrudeuse, vu dans la direction d'écoulement de la matière en fusion, présente, juste avant la plaque perforée (6), un cône d'afflux (3) qui est séparé physiquement de la plaque perforée de telle sorte que les surfaces de passage d'écoulement (7) de la plaque perforée puissent être déplacées par rapport au cône d'afflux (3).

2. Extrudeuse selon la revendication 1, dans laquelle la distance entre les surfaces de passage d'écoulement (7) de la plaque perforée est dimensionnée de telle sorte que lors du positionnement d'une surface de passage d'écoulement à la sortie du canal d'écoulement (2), au moins une autre surface de passage d'écoulement se trouve à l'extérieur du boîtier de l'extrudeuse.

3. Extrudeuse selon l'une quelconque des revendications 1 et 2, dans laquelle le dispositif remplaçable comprend, vu dans la direction d'écoulement de la matière en fusion, une première plaque (9) et une deuxième plaque (10) qui présentent toutes deux une ouverture à l'intérieur, à travers laquelle peut s'écouler la matière en fusion, et la première plaque (9) et/ou la deuxième plaque (10) présentant un évidement (7) dans lequel la plaque perforée (6) est supportée de manière coulissante.

4. Extrudeuse selon l'une quelconque des revendications 1 à 3, qui présente en outre un entraînement de commande (11) pour faire coulisser la plaque perforée (6), au moins un capteur pour détecter une pression dans le canal d'écoulement (2) ainsi qu'un module de commande, le module de commande étant agencé de telle sorte que lorsqu'une valeur critique prédéfinie pour la pression ou pour une différence de pression est atteinte, la plaque perforée (6) soit coulissée à l'aide de l'entraînement de commande (11).
